# EUROPEAN PATENT APPLICATION

(11) **EP 4 852 353 A1**
(43) Date of publication of application: **09.12.2026**
(21) Application number: 25855746.1
(22) Date of filing: 12.06.2025
(51) Int. Cl.: H04J 14/02

(54) **CONVERGENCE-LAYER NETWORK DEVICE, CORE-LAYER NETWORK DEVICE, AND NETWORK SYSTEM**

(30) Priority: 22.08.2024 CN 202411162619
(71) Applicant: Ruijie Networks Co., Ltd., Fuzhou, Fujian 350002 (CN)
(72) Inventor: WANG, Xiaojie, Fuzhou, Fujian 350002 (CN)
(74) Representative: Boult Wade Tennant LLP
(86) International application number: PCT/CN2025/100781
(87) International publication number: WO 2026/040575

(57) **Abstract**

Embodiments of this application provide an aggregation-layer network device, a core-layer network device, and a network system. The aggregation-layer network device includes a first aggregation module, and the first aggregation module is connected to a plurality of first access-layer network devices and a core-layer network device respectively. The first aggregation module includes: a first multiplexer, configured to couple first optical signals respectively from the plurality of first access-layer network devices to obtain a first coupled optical signal; a first demultiplexer, configured to decouple a second coupled optical signal from the core-layer network device to obtain a plurality of second optical signals; and a first optical circulator, configured to send the first coupled optical signal from the first multiplexer to the core-layer network device through a first port and a second port in sequence, and send the second coupled optical signal from the core-layer network device to the first demultiplexer through the second port and a third port in sequence.

## Description

### CROSS-REFERENCE TO RELATED APPLICATIONS

This application claims priority to Chinese Patent Application No. 202411162619.2, filed with the China National Intellectual Property Administration on August 22, 2024 and entitled "AGGREGATION-LAYER NETWORK DEVICE, CORE-LAYER NETWORK DEVICE, AND NETWORK SYSTEM", which is incorporated herein by reference in its entirety.

### TECHNICAL FIELD

This application relates to the field of communication technologies, and in particular, to an aggregation-layer network device, a core-layer network device, and a network system.

### BACKGROUND

A three-layer network architecture includes a core layer, an aggregation layer, and an access layer. Various network devices at the access layer are referred to as access-layer network devices. Various network devices at the aggregation layer are referred to as aggregation-layer network devices. Various network devices at the core layer are referred to as core-layer network devices.

Bidirectional transmission using different wavelengths over a single fiber may be performed in the three-layer network architecture. Specifically, this technology uses different wavelengths on one optical fiber to separately transmit optical signals in two directions, thereby implementing bidirectional communication.

In the foregoing solution, taking an aggregation-layer network device as an example, a multiplexer/demultiplexer in the aggregation-layer network device distinguishes between an optical signal in a receiving direction and an optical signal in a transmitting direction based on different wavelengths of the optical signal in the receiving direction and the optical signal in the transmitting direction.

### SUMMARY

Exemplary embodiments of this application provide an aggregation-layer network device, a core-layer network device, and a network system.

According to a first aspect, an embodiment of this application provides an aggregation-layer network device, including a first aggregation module, where the first aggregation module is connected to a plurality of first access-layer network devices and a core-layer network device respectively, and the first aggregation module includes:
a first multiplexer, configured to couple first optical signals respectively from the plurality of first access-layer network devices to obtain a first coupled optical signal;
a first demultiplexer, configured to decouple a second coupled optical signal from the core-layer network device to obtain a plurality of second optical signals; and
a first optical circulator, including:
   a first port, connected to the first multiplexer;
   a second port, connected to the core-layer network device; and
   a third port, connected to the first demultiplexer, where
   the first optical circulator is configured to send the first coupled optical signal from the first multiplexer to the core-layer network device through the first port and the second port in sequence, and send the second coupled optical signal from the core-layer network device to the first demultiplexer through the second port and the third port in sequence.

In a possible implementation, the aggregation-layer network device further includes:
a second aggregation module, where the second aggregation module includes:
a third optical circulator, where a first port of the third optical circulator is connected to a fifth multiplexer;
the fifth multiplexer, configured to couple fifth optical signals respectively sent by a plurality of second access-layer network devices to obtain a second intermediate optical signal, and send the second intermediate optical signal to a third multiplexer and/or demultiplexer through the third optical circulator;
a fifth demultiplexer, where a third port of the third optical circulator is connected to the fifth demultiplexer; and
the third multiplexer and/or demultiplexer, configured to receive a first intermediate optical signal sent by the first multiplexer in the first aggregation module through the first optical circulator and the second intermediate optical signal, couple the first intermediate optical signal and the second intermediate optical signal to obtain the first coupled optical signal, and send the first coupled optical signal to the core-layer network device, where the first intermediate optical signal is obtained by the first multiplexer coupling the first optical signals respectively sent by the plurality of first access-layer network devices, where
a first end of the third multiplexer and/or demultiplexer is connected to the second port of the first optical circulator in the first aggregation module, the first end of the third multiplexer and/or demultiplexer is further connected to a second port of the third optical circulator in the second aggregation module, and a second end of the third multiplexer and/or demultiplexer is connected to the core-layer network device.

In a possible implementation, the third multiplexer and/or demultiplexer are/is further configured to decouple the second coupled optical signal sent by the core-layer network device to obtain a third intermediate optical signal and a fourth intermediate optical signal, send the third intermediate optical signal to the second port of the first optical circulator, and send the fourth intermediate optical signal to the second port of the third optical circulator; the first optical circulator of the first aggregation module is further configured to send the third intermediate optical signal to the first demultiplexer through the third port of the first optical circulator; and the first demultiplexer of the first aggregation module is further configured to decouple the third intermediate optical signal to obtain the plurality of second optical signals, and send the plurality of second optical signals to the plurality of first access-layer network devices respectively; and the third optical circulator of the second aggregation module is further configured to send the fourth intermediate optical signal to the fifth demultiplexer through the third port of the third optical circulator; and the fifth demultiplexer of the second aggregation module is further configured to decouple the fourth intermediate optical signal to obtain a plurality of sixth optical signals, and send the plurality of sixth optical signals to the plurality of second access-layer network devices respectively.

In a possible implementation, the third multiplexer and/or demultiplexer are/is configured to couple the first intermediate optical signal and the second intermediate optical signal to obtain the first coupled optical signal, and send the first coupled optical signal to a fourth multiplexer and/or demultiplexer in the core-layer network device, where the second end of the third multiplexer and/or demultiplexer is connected to the fourth multiplexer and/or demultiplexer; and the third multiplexer and/or demultiplexer are/is further configured to decouple the second coupled optical signal sent by the fourth multiplexer and/or demultiplexer to obtain the third intermediate optical signal and the fourth intermediate optical signal, send the third intermediate optical signal to the second port of the first optical circulator, and send the fourth intermediate optical signal to the second port of the third optical circulator.

In a possible implementation, the first optical circulator is configured to send the first coupled optical signal through the second port of the first optical circulator to a fourth multiplexer and/or demultiplexer in the core-layer network device, where the second port of the first optical circulator is connected to the fourth multiplexer and/or demultiplexer; and the first optical circulator is further configured to send the second coupled optical signal, which is input by the fourth multiplexer and/or demultiplexer through the second port, to the first demultiplexer through the third port.

In a possible implementation, a type of the first multiplexer is any one of the following: a coarse wavelength division multiplexer, a dense wavelength division multiplexer, or a multi-wavelength division multiplexer; and a type of the first demultiplexer is any one of the following: a coarse wavelength division multiplexer, a dense wavelength division multiplexer, or a multi-wavelength division multiplexer.

According to a second aspect, this application provides a core-layer network device, including a first core module, where the first core module is connected to a plurality of optical modules in the core-layer network device and an aggregation-layer network device respectively, and the first core module includes:
a second multiplexer, configured to couple fourth optical signals respectively from the plurality of optical modules to obtain a second coupled optical signal;
a second demultiplexer, configured to decouple a first coupled optical signal from the aggregation-layer network device to obtain a plurality of third optical signals; and
a second optical circulator, including:
   a first port, connected to the second multiplexer;
   a second port, connected to the aggregation-layer network device; and
   a third port, connected to the second demultiplexer, where
   the second circulator is configured to send the first coupled optical signal from the aggregation-layer network device to the second demultiplexer through the second port and the third port in sequence; and send the second coupled optical signal from the second multiplexer to the aggregation-layer network device through the first port and the second port in sequence.

In a possible implementation, the core-layer network device further includes:
a fourth multiplexer and/or demultiplexer, configured to decouple the first coupled optical signal sent by the aggregation-layer network device to obtain a fifth intermediate optical signal and a sixth intermediate optical signal, send the fifth intermediate optical signal to the second port of the second optical circulator, and send the sixth intermediate optical signal to a fourth optical circulator of a second core module; and
the second core module, where the second core module includes:
   the fourth optical circulator, configured to send the sixth intermediate optical signal to a sixth demultiplexer through a third port of the fourth optical circulator, where a second port of the fourth optical circulator is connected to the fourth multiplexer and/or demultiplexer, and the third port of the fourth optical circulator is connected to the sixth demultiplexer;
   the sixth demultiplexer, configured to decouple the sixth intermediate optical signal to obtain a plurality of seventh optical signals, and send the plurality of seventh optical signals to corresponding optical modules respectively, where a quantity of the corresponding optical modules is the same as a quantity of the plurality of seventh optical signals; and
   a sixth multiplexer, where the sixth multiplexer is connected to a first port of the fourth optical circulator, where
   a first end of the fourth multiplexer and/or demultiplexer is connected to the second port of the second optical circulator in the first core module, the first end of the fourth multiplexer and/or demultiplexer is further connected to the second port of the fourth optical circulator in the second core module, and a second end of the fourth multiplexer and/or demultiplexer is connected to the aggregation-layer network device.

In a possible implementation, the second optical circulator is configured to send the fifth intermediate optical signal to the second demultiplexer through the third port of the second optical circulator; and the second demultiplexer is configured to decouple the fifth intermediate optical signal to obtain the plurality of third optical signals, and send the plurality of third optical signals to the corresponding optical modules respectively, where a quantity of the corresponding optical modules is the same as a quantity of the plurality of third optical signals.

In a possible implementation, the second multiplexer is configured to couple the fourth optical signals respectively sent by the plurality of optical modules to obtain a seventh intermediate optical signal, and send the seventh intermediate optical signal to the fourth multiplexer and/or demultiplexer through the second optical circulator; the sixth multiplexer is configured to couple eighth optical signals respectively sent by the plurality of optical modules to obtain an eighth intermediate optical signal, and send the eighth intermediate optical signal to the fourth multiplexer and/or demultiplexer through the fourth optical circulator; and the fourth multiplexer and/or demultiplexer are/is further configured to couple the seventh intermediate optical signal and the eighth intermediate optical signal to obtain the second coupled optical signal, and send the second coupled optical signal to the aggregation-layer network device.

In a possible implementation, the fourth multiplexer and/or demultiplexer are/is configured to decouple the first coupled optical signal sent by a third multiplexer and/or demultiplexer to obtain the fifth intermediate optical signal and the sixth intermediate optical signal, send the fifth intermediate optical signal to the second port of the second optical circulator, and send the sixth intermediate optical signal to the second port of the fourth optical circulator, where the second end of the fourth multiplexer and/or demultiplexer is connected to the third multiplexer and/or demultiplexer in the aggregation-layer network device; and the fourth multiplexer and/or demultiplexer are/is further configured to couple the seventh intermediate optical signal and the eighth intermediate optical signal to obtain the second coupled optical signal, and send the second coupled optical signal to the third multiplexer and/or demultiplexer.

In a possible implementation, the second optical circulator is configured to send the first coupled optical signal input by a third multiplexer and/or demultiplexer through the second port to the second demultiplexer through the third port, where the second port of the second optical circulator is connected to the third multiplexer and/or demultiplexer in the aggregation-layer network device; and the second optical circulator is further configured to send the second coupled optical signal to the third multiplexer and/or demultiplexer through the second port.

In a possible implementation, the core-layer network device further includes: an optical transmitting assembly, configured to transmit a plurality of ninth optical signals of different wavelengths to a seventh multiplexer, where the seventh multiplexer includes the second multiplexer, the ninth optical signals include the fourth optical signals, the seventh multiplexer is configured to couple the received plurality of ninth optical signals to obtain a third coupled optical signal, and send the third coupled optical signal to a fifth optical circulator, the third coupled optical signal includes the second coupled optical signal, and the fifth optical circulator includes the second optical circulator; and an optical receiving assembly, configured to receive a plurality of tenth optical signals sent by a seventh demultiplexer, where the seventh demultiplexer includes the second demultiplexer, the seventh demultiplexer is configured to receive a fourth coupled optical signal sent by the fifth optical circulator, and decouple the fourth coupled optical signal to obtain the plurality of tenth optical signals, the fourth coupled optical signal includes the first coupled optical signal, and the tenth optical signals include the third optical signals.

In a possible implementation, an integrated optical module is disposed on the core-layer network device, and the integrated optical module includes the optical transmitting assembly, the optical receiving assembly, the fifth optical circulator, the seventh multiplexer, and the seventh demultiplexer.

In a possible implementation, the integrated optical module is pluggably connected to the core-layer network device.

In a possible implementation, a type of the second multiplexer is any one of the following: a coarse wavelength division multiplexer, a dense wavelength division multiplexer, or a multi-wavelength division multiplexer; and a type of the second demultiplexer is any one of the following: a coarse wavelength division multiplexer, a dense wavelength division multiplexer, or a multi-wavelength division multiplexer.

According to a third aspect, this application provides a network system, including: at least two access-layer network devices, at least one aggregation-layer network device according to any one of the first aspect, and at least one core-layer network device according to any one of the second aspect.

In the aggregation-layer network device, the core-layer network device, and the network system provided in this application, optical circulators are additionally provided in the aggregation-layer network device and the core-layer network device respectively. In this way, the first coupled optical signal output by the first multiplexer in the aggregation-layer network device can enter through the first port of the first optical circulator, be output through the second port, be transmitted to the core-layer network device through an optical fiber, enter through the second port of the second optical circulator, be output through the third port, and then be decoupled by the second demultiplexer in the core-layer network device and respectively sent to various optical modules in the core-layer network device. The second coupled optical signal output by the second multiplexer in the core-layer network device can enter through the first port of the second optical circulator, be output through the second port, be transmitted to the aggregation-layer network device through an optical fiber, then enter through the second port of the first optical circulator, be output through the third port, and then be decoupled by the first demultiplexer in the aggregation-layer network device and respectively sent to various access-layer network devices. The optical circulators additionally provided in the aggregation-layer network device and the core-layer network device of this application can separate the received optical signal and the transmitted optical signal, so that the received optical signal and the transmitted optical signal can use a same wavelength.

### BRIEF DESCRIPTION OF DRAWINGS

The accompanying drawings herein are incorporated into this specification and form a part of this specification. They illustrate embodiments conforming to this application and are intended to explain the principles of this application together with this specification. To describe the technical solutions in the embodiments of this application more clearly, the following briefly describes the accompanying drawings required for describing the embodiments of this application. It is clear that the accompanying drawings in the following description show merely some embodiments of this application, and a person of ordinary skill in the art may still derive drawings of other embodiments from the accompanying drawings without creative efforts.
FIG. 1 is a schematic diagram of a three-layer network architecture shown according to an exemplary embodiment;
FIG. 2 is a schematic diagram of a structure of an aggregation-layer network device shown according to an exemplary embodiment;
FIG. 3 is a schematic diagram of a structure of a core-layer network device shown according to an exemplary embodiment;
FIG. 4 is a schematic diagram of data interaction between an aggregation-layer network device and a core-layer network device shown according to an exemplary embodiment;
FIG. 5 is another schematic diagram of data interaction between an aggregation-layer network device and a core-layer network device shown according to an exemplary embodiment;
FIG. 6 is still another schematic diagram of data interaction between an aggregation-layer network device and a core-layer network device shown according to an exemplary embodiment;
FIG. 7 is still another schematic diagram of data interaction between an aggregation-layer network device and a core-layer network device shown according to an exemplary embodiment; and
FIG. 8 is a schematic diagram of a structure of an integrated optical module shown according to an exemplary embodiment.

Embodiments of this application have been illustrated clearly in the foregoing drawings, and will be described in more detail hereinafter. These drawings and text descriptions are not intended to limit the scope of the conception of this application in any manner, but to illustrate the concept of this application to a person skilled in the art by referring to specific embodiments.

### DESCRIPTION OF EMBODIMENTS

Exemplary embodiments are described in detail herein, and examples of the exemplary embodiments are presented in the accompanying drawings. When the following description relates to the accompanying drawings, unless otherwise specified, same numbers in different accompanying drawings represent same or similar elements. Implementations described in the following exemplary embodiments do not represent all implementations consistent with this application. On the contrary, they are merely examples of apparatuses and methods that are described in the appended claims in detail and that are consistent with some aspects of this application.

Terms such as "first" and "second" used in this application may be used to describe various concepts in this specification, but unless otherwise specified, these concepts are not limited by these terms. These terms are only used to distinguish one concept from another.

The term "at least one" used in this application includes one, two, or more than two; "a plurality of" includes two or more than two; "each" refers to each of the corresponding plurality; and "any" refers to any one of the plurality.

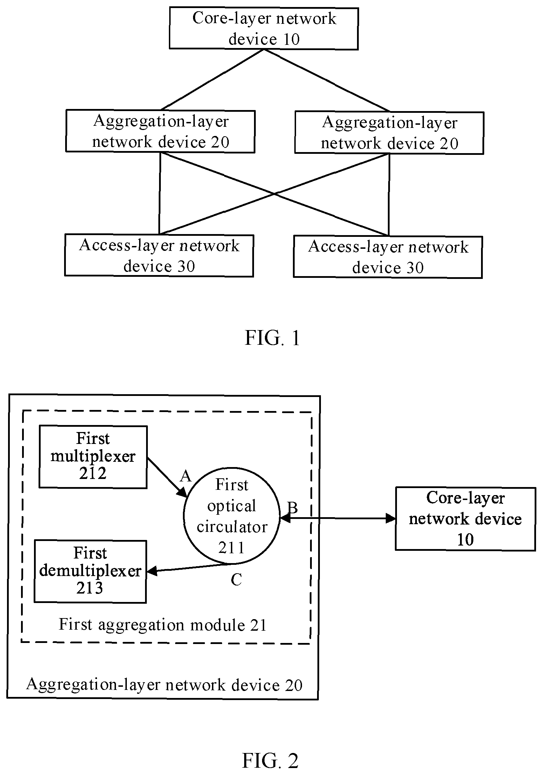

A three-layer network architecture includes a core layer, an aggregation layer, and an access layer. A network device provided at the access layer is referred to as an access-layer network device. A network device provided at the aggregation layer is referred to as an aggregation-layer network device. A network device provided at the core layer is referred to as a core-layer network device. FIG. 1 is a schematic diagram of a three-layer network architecture shown according to an exemplary embodiment. The three-layer network architecture includes a core-layer network device 10, two aggregation-layer network devices 20, and two access-layer network devices 30.

It should be noted that quantities of core-layer network devices, aggregation-layer network devices, and access-layer network devices may be set according to actual needs. FIG. 1 shows a case in which the three-layer network architecture includes one core-layer network device, two aggregation-layer network devices, and two access-layer network devices. Various other possible cases are not exhaustively described.

Bidirectional transmission using different wavelengths over a single fiber may be performed in the three-layer network architecture. Specifically, in this technology, one optical fiber is deployed between an aggregation-layer network device and a core-layer network device, and optical signals in two directions are separately transmitted over the optical fiber by using different wavelengths, thereby implementing bidirectional communication.

Taking an aggregation-layer network device as an example, in the related art, a multiplexer/demultiplexer in the aggregation-layer network device distinguishes between an optical signal in a receiving direction and an optical signal in a transmitting direction based on different wavelengths of the optical signal in the receiving direction and the optical signal in the transmitting direction, to avoid interference between the optical signal in the receiving direction and the optical signal in the transmitting direction. Clearly, this solution requires the optical signal in the transmitting direction and the optical signal in the receiving direction to use different wavelengths, and therefore needs to use more wavelength resources, resulting in low wavelength utilization.

To save wavelength resources and achieve use of the same wavelength for the optical signal in the receiving direction and the optical signal in the transmitting direction, it is necessary to deploy two optical fibers between the aggregation-layer network device and the core-layer network device, and use different optical fibers to transmit the optical signals in the two directions, but this solution consumes a large quantity of optical fibers.

This application provides an aggregation-layer network device, a core-layer network device, and a network system. It may be understood that the aggregation-layer network device, the core-layer network device, and the network system in this application may be applied to a conventional three-layer network architecture or other network architectures. Application scenarios are not limited in embodiments of this application.

For example, this application may be applied to a campus optical network. The campus optical network is an optical communication network specifically designed for a campus. The campus optical network utilizes optical fibers as transmission media to provide high-speed and reliable data connections for various departments, buildings, and devices in the campus. A core layer in the campus optical network is located at the center of the campus network, and is configured to connect optical network devices in various buildings or areas to achieve global high-speed data switching and routing. The aggregation layer is configured to connect optical network devices in various buildings or areas to the core layer, and perform data aggregation and distribution functions. The access layer provides access points for end users or devices, connecting the end users or devices to the campus optical network.

The technical solutions of this application are described in detail below with reference to specific embodiments. The specific embodiments below may be combined with each other, and same or similar concepts or processes may not be described again in some embodiments. The following describes the embodiments of this application with reference to accompanying drawings.

FIG. 2 is a schematic diagram of a structure of an aggregation-layer network device shown according to an exemplary embodiment. The aggregation-layer network device 20 in this embodiment includes a first aggregation module 21. The first aggregation module 21 may include a first optical circulator 211, a first multiplexer 212, and a first demultiplexer 213. A first port A of the first optical circulator 211 is connected to the first multiplexer 212, a second port B of the first optical circulator 211 is connected to a core-layer network device 10, and a third port C of the first optical circulator 211 is connected to the first demultiplexer 213.

The first multiplexer 212 may be connected to a plurality of first access-layer network devices respectively through optical modules. The first multiplexer 212 is configured to couple first optical signals respectively sent by the plurality of first access-layer network devices to obtain a first coupled optical signal, and send the first coupled optical signal to the first port A of the first optical circulator 211; and the first optical circulator 211 is configured to send the first coupled optical signal to the core-layer network device 10 through the second port B.

The first demultiplexer 213 may be connected to a plurality of first access-layer network devices respectively through optical modules, and the plurality of first access-layer network devices connected to the first multiplexer 212 are the same as the plurality of first access-layer network devices connected to the first demultiplexer 213. The first optical circulator 211 is further configured to send a second coupled optical signal, which is input by the core-layer network device 10 through the second port B, to the first demultiplexer 213 through the third port C; and the first demultiplexer 213 is configured to decouple the second coupled optical signal to obtain a plurality of second optical signals, and send the plurality of second optical signals to the plurality of first access-layer network devices respectively.

The first optical circulator may be a three-port device with unidirectional transmission characteristics, where optical transmission is enabled from the first port A to the second port B, and optical transmission is also enabled from the second port B to the third port C. Optical transmission is isolated from the second port B to the first port A, optical transmission is isolated from the third port C to the second port B, and optical transmission is also isolated from the first port A to the third port C. The type of the first optical circulator may be set according to actual needs. This is not limited in this application. For example, the first optical circulator is a free-space optical circulator.

In a possible implementation, the first multiplexer 212 and the first demultiplexer 213 may be two independent components provided separately; or the first multiplexer 212 and the first demultiplexer 213 may be integrated in one component. This is not limited in this application. For ease of representation, FIG. 2 takes a case in which the first multiplexer 212 and the first demultiplexer 213 are separately and independently provided as an example, and for ease of description, in subsequent embodiments, a case in which the first multiplexer 212 and the first demultiplexer 213 are separately and independently provided is also described.

Quantities of wavelength channels of the first multiplexer 212 and the first demultiplexer 213 in the first aggregation module 21 are the same.

The first multiplexer 212 and the first optical circulator 211 are connected through an optical fiber, the first demultiplexer 213 and the first optical circulator 211 are connected through an optical fiber, and the first optical circulator 211 and the core-layer network device 10 are also connected through an optical fiber.

One or more optical modules are disposed on one first access-layer network device, and a quantity of optical modules may be set according to actual needs. The optical module may be disposed inside the first access-layer network device, or may be a separate component such as a pluggable optical module. This is not limited in this application. For ease of description, in subsequent embodiments, an example in which one optical module is disposed on one first access-layer network device and the optical module is disposed inside the first access-layer network device is used for description.

In some embodiments, the type of the first multiplexer is any one of the following: a coarse wavelength division multiplexer (English: Coarse Wavelength Division Multiplexer, CWDM for short), a dense wavelength division multiplexer (English: Dense Wavelength Division Multiplexer, DWDM for short), or a multi-wavelength division multiplexer (English: Multi-Wavelength Division Multiplexer, MWDM for short); and the type of the first demultiplexer is any one of the following: a coarse wavelength division multiplexer, a dense wavelength division multiplexer, or a multi-wavelength division multiplexer.

According to the embodiment provided in this application, when the first access-layer network devices send optical signals to the core-layer network device through the aggregation-layer network device, the plurality of first access-layer network devices send a plurality of first optical signals to the first multiplexer of the aggregation-layer network device respectively. The first multiplexer couples the received plurality of first optical signals to obtain the first coupled optical signal. The first coupled optical signal is transmitted to the first optical circulator through an optical fiber, and enters the first optical circulator from the first port of the first optical circulator. The first optical circulator outputs the first coupled optical signal through the second port, and transmits the first coupled optical signal to the core-layer network device through an optical fiber.

When the core-layer network device sends optical signals to the first access-layer network devices through the aggregation-layer network device, the core-layer network device outputs the second coupled optical signal. The second coupled optical signal is transmitted to the first optical circulator through an optical fiber, and enters the first optical circulator from the second port of the first optical circulator. The first optical circulator outputs the second coupled optical signal through the third port, and transmits the second coupled optical signal to the first demultiplexer of the aggregation-layer network device through an optical fiber. The first demultiplexer decouples the second coupled optical signal to obtain the plurality of second optical signals. The plurality of second optical signals are respectively transmitted to the plurality of first access-layer network devices through optical fibers.

According to the embodiment provided in this application, because the first optical circulator can separate the optical signal in the transmitting direction and the optical signal in the receiving direction through different ports, the optical signal in the transmitting direction and the optical signal in the receiving direction in the first aggregation module 21 may be optical signals of a same wavelength, thereby improving wavelength utilization.

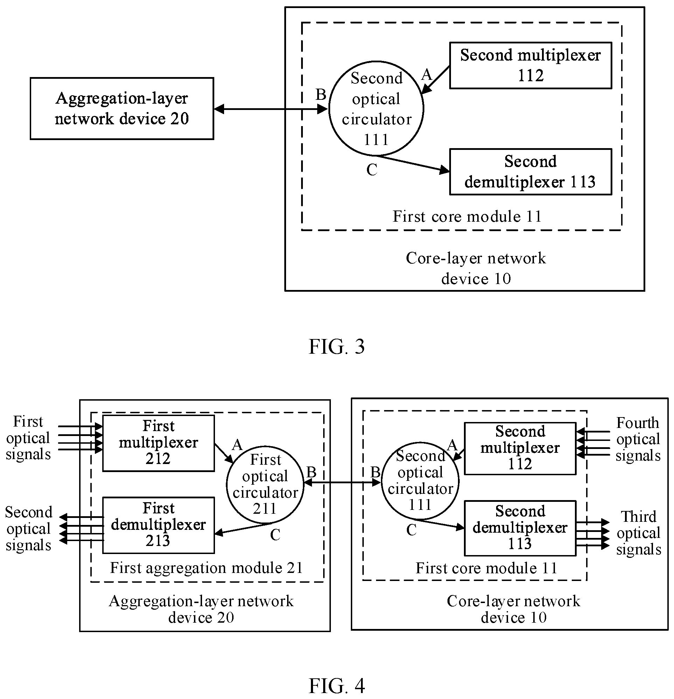

FIG. 3 is a schematic diagram of a structure of a core-layer network device shown according to an exemplary embodiment. The core-layer network device 10 in this embodiment includes a first core module 11, and the first core module 11 includes a second optical circulator 111, a second multiplexer 112, and a second demultiplexer 113. A first port A of the second optical circulator 111 is connected to the second multiplexer 112, a second port B of the second optical circulator 111 is connected to an aggregation-layer network device 20, and a third port C of the second optical circulator 111 is connected to the second demultiplexer 113.

The second demultiplexer 113 is further connected to a plurality of optical modules in the core-layer network device 10 respectively. The second optical circulator 111 is configured to send a first coupled optical signal, which is input by the aggregation-layer network device 20 through the second port B, to the second demultiplexer 113 through the third port C; and the second demultiplexer 113 is configured to decouple the first coupled optical signal to obtain a plurality of third optical signals, and send the plurality of third optical signals to the plurality of optical modules of the core-layer network device 10 respectively.

The second multiplexer 112 is further connected to a plurality of optical modules in the core-layer network device 10 respectively, and the plurality of optical modules connected to the second multiplexer 112 are the same as the plurality of optical modules connected to the second demultiplexer 113. The second multiplexer 112 is configured to couple fourth optical signals respectively sent by the plurality of optical modules to obtain a second coupled optical signal, and send the second coupled optical signal to the first port A of the second optical circulator 111; and the second optical circulator 111 is further configured to send the second coupled optical signal to the aggregation-layer network device 20 through the second port B.

The second optical circulator 111 may be a three-port device with unidirectional transmission characteristics, where optical transmission is enabled from the first port A to the second port B, and optical transmission is also enabled from the second port B to the third port C, while optical transmission is isolated from the second port B to the first port A, optical transmission is isolated from the third port C to the second port B, and optical transmission is isolated from the first port A to the third port C. The type of the second optical circulator 111 may be set according to actual needs. This is not limited in this application. For example, the second optical circulator is a free-space optical circulator.

According to the embodiment provided in this application, because the second optical circulator 111 can separate the optical signal in the transmitting direction and the optical signal in the receiving direction through different ports, the optical signal in the transmitting direction and the optical signal in the receiving direction in the first core module 11 may be optical signals of a same wavelength, thereby improving wavelength utilization.

In a possible implementation, the second multiplexer and the second demultiplexer may be two components provided separately; or the second multiplexer and the second demultiplexer may be integrated in one component. This is not limited in this application. For ease of representation, FIG. 3 takes a case in which the second multiplexer and the second demultiplexer are separately provided as an example, and for ease of description, in subsequent embodiments, a case in which the second multiplexer and the second demultiplexer are separately provided is also described.

Quantities of wavelength channels of the second multiplexer and the second demultiplexer in the first core module are the same.

The second multiplexer and the second optical circulator are connected through an optical fiber, the second demultiplexer and the second optical circulator are connected through an optical fiber, and the second optical circulator and the aggregation-layer network device are also connected through an optical fiber.

A plurality of optical modules are disposed on one core-layer network device, and a quantity of optical modules may be set according to actual needs. The optical module may be disposed inside the core-layer network device, or may be a separate component such as a pluggable optical module. This is not limited in this application. For ease of description, in subsequent embodiments, a case in which the optical modules are disposed inside the core-layer network device is used as an example for description.

In some embodiments, a type of the second multiplexer is any one of the following: a coarse wavelength division multiplexer, a dense wavelength division multiplexer, or a multi-wavelength division multiplexer; and a type of the second demultiplexer is any one of the following: a coarse wavelength division multiplexer, a dense wavelength division multiplexer, or a multi-wavelength division multiplexer.

According to the embodiment provided in this application, when the plurality of first access-layer network devices send optical signals to the core-layer network device through the aggregation-layer network device, the first coupled optical signal is output from the aggregation-layer network device, is transmitted to the second optical circulator of the core-layer network device through an optical fiber, enters through the second port of the second optical circulator, is output through the third port, and is transmitted to the second demultiplexer through an optical fiber. The second demultiplexer decouples the first coupled optical signal to obtain the plurality of third optical signals, where the plurality of third optical signals are respectively transmitted to the plurality of optical modules of the core-layer network device through optical fibers. When the core-layer network device sends optical signals to the plurality of first access-layer network devices through the aggregation-layer network device, the plurality of optical modules in the core-layer network device respectively send fourth optical signals to the second multiplexer. The second multiplexer couples the received plurality of fourth optical signals to obtain the second coupled optical signal. The second coupled optical signal is transmitted to the second optical circulator through an optical fiber, enters through the first port of the second optical circulator, is output through the second port, and is transmitted to the aggregation-layer network device through an optical fiber.

According to the embodiment provided in this application, a total quantity of access-layer network devices in the three-layer network architecture is M, a quantity of the plurality of optical modules in the core-layer network device is M, and M is an integer greater than 1.

The optical circulator used in this embodiment of this application has wide-band application performance. A band refers to a continuous range of wavelengths, and is used to describe a specific wavelength range used in optical fiber communication, and the band includes a plurality of wavelength channels. On one hand, as the band supported by the optical circulator becomes wider, the cost of the optical circulator also becomes higher. On the other hand, as the optical circulator supports more bands, an edge band farther away from a center band suffers a greater loss and is more susceptible to interference, resulting in poorer signal quality of the edge band. Therefore, when the band range to be supported by the optical circulator is determined, the foregoing impact may be reduced by increasing the quantity of optical circulators. In the three-layer network architecture, a value of M is fixed. Therefore, the total quantity of the plurality of wavelength channels to be supported by the optical circulators in the aggregation-layer network device is fixed, and the band is also fixed. In practical applications, a person skilled in the art may select optical circulators with suitable bands and adaptively set the quantity of optical circulators according to actual needs.

For example, an optical circulator a supports 16 wavelength channels, an optical circulator b supports 8 wavelength channels, and an optical circulator c supports 4 wavelength channels. When M = 16, one optical circulator a may be disposed in the aggregation-layer network device. Alternatively, two optical circulators b may be disposed in the aggregation-layer network device, where the two optical circulators b support 16 wavelength channels in total. Alternatively, four optical circulators c may be disposed in the aggregation-layer network device, where the four optical circulators c support 16 wavelength channels in total. Similarly, one optical circulator a may be disposed in the core-layer network device; or two optical circulators b may be disposed in the aggregation-layer network device, and the two optical circulators b support 16 wavelength channels in total; or four optical circulators c may be disposed in the core-layer network device, and the four optical circulators c support 16 wavelength channels in total.

For another example, when M = 8, one optical circulator b may be disposed in the aggregation-layer network device, or two optical circulators c may be disposed in the aggregation-layer network device, and the two optical circulators c support 8 wavelength channels in total. Similarly, one optical circulator b may be disposed in the core-layer network device; or two optical circulators c may be disposed in the core-layer network device, and the two optical circulators c support 8 wavelength channels in total.

A quantity of optical circulators in the aggregation-layer network device and a quantity of optical circulators in the core-layer network device are described below by using a plurality of possible embodiments.

In a possible implementation, M is an integer greater than 1, one optical circulator may be disposed in the aggregation-layer network device, and one optical circulator may also be disposed in the core-layer network device. The access-layer network devices in the three-layer network architecture may be first access-layer network devices, and a quantity of the first access-layer network devices is M.

For example, referring to FIG. 4, the aggregation-layer network device 20 includes the first aggregation module 21 and one optical circulator; and the core-layer network device 10 includes the first core module 11, and one optical circulator. The quantity of wavelength channels of each of the first multiplexer 212 and the first demultiplexer 213 is M, the quantity of wavelength channels of each of the second multiplexer 112 and the second demultiplexer 113 is also M, and the quantity of wavelength channels of each of the first optical circulator 211 and the second optical circulator 111 is also M.

When the access-layer network devices send optical signals to the core-layer network device through the aggregation-layer network device, the first multiplexer is configured to couple first optical signals respectively sent by the M first access-layer network devices to obtain a first coupled optical signal, and send the first coupled optical signal to the first port of the first optical circulator; and the first optical circulator is configured to send the first coupled optical signal to the second port of the second optical circulator through the second port. Correspondingly, the second optical circulator is configured to send the first coupled optical signal, which is input by the first optical circulator through the second port, to the second demultiplexer through the third port; and the second demultiplexer is configured to decouple the first coupled optical signal to obtain M third optical signals, and send the M third optical signals to the M optical modules of the core-layer network device respectively.

When the core-layer network device sends optical signals to the first access-layer network devices through the aggregation-layer network device, the second multiplexer is configured to couple fourth optical signals respectively sent by the M optical modules of the core-layer network device to obtain a second coupled optical signal, and send the second coupled optical signal to the first port of the second optical circulator; and the second optical circulator is further configured to send the second coupled optical signal to the second port of the first optical circulator through the second port. Correspondingly, the first optical circulator is further configured to send the second coupled optical signal, which is input by the second optical circulator through the second port, to the first demultiplexer through the third port; and the first demultiplexer is configured to decouple the second coupled optical signal to obtain M second optical signals, and send the M second optical signals to the M first access-layer network devices respectively.

Taking a case in which types of the first multiplexer, the first demultiplexer, the second multiplexer, and the second demultiplexer are all CWDMs as an example, the CWDM uses wavelengths from 1270 nm to 1610 nm, and supports 18 wavelength channels, with a channel spacing of 20 nm. The first optical circulator and the second optical circulator can separate the received optical signal and the transmitted optical signal, so that the received optical signal and the transmitted optical signal may use a same wavelength, and the received optical signal and the transmitted optical signal are further transmitted on a single optical fiber between the first optical circulator and the second optical circulator. Although the wavelengths of the two optical signals are the same, that is, frequencies thereof are the same, transmission directions of the two optical signals are different and phases thereof are different. Therefore, no interference phenomenon occurs, and the two optical signals do not interfere with each other during transmission. For example, if M = 16, 16 continuous wavelength channels may be selected from the 18 wavelength channels supported by the CWDM, and the 16 wavelength channels are respectively allocated to 16 first access-layer network devices connected to the first multiplexer 212, and the 16 wavelength channels may also be allocated to 16 optical modules in the core-layer network device 10. During signal transmission, the first multiplexer 212 couples 16 first optical signals of different wavelengths to obtain a first coupled optical signal, which is transmitted to the second optical circulator 111 through the first optical circulator 211. Meanwhile, the second multiplexer 112 couples 16 fourth optical signals of different wavelengths to obtain a second coupled optical signal, which is transmitted to the first optical circulator 211 through the second optical circulator 111. Therefore, the single optical fiber connecting the first optical circulator 211 and the second optical circulator 111 can achieve 16-transmit and 16-receive bidirectional transmission using the same wavelength.

It should be noted that the bidirectional transmission using the same wavelength may be that the wavelength of the optical signal in the transmitting direction in the first aggregation module is the same as the wavelength of the optical signal in the receiving direction in the first aggregation module, and the wavelength of the optical signal in the transmitting direction in the first core module is the same as the wavelength of the optical signal in the receiving direction in the first core module.

In another possible implementation, when M is greater than or equal to 4, a plurality of optical circulators may be disposed in the aggregation-layer network device, while one optical circulator may be disposed in the core-layer network device.

For example, a plurality of first aggregation modules are disposed in the aggregation-layer network device, and one first core module is disposed in the core-layer network device. A sum of quantities of wavelength channels of first multiplexers in the plurality of first aggregation modules is M (a sum of quantities of wavelength channels of first demultiplexers is also M), a quantity of wavelength channels of a second multiplexer in the core module is M (a quantity of wavelength channels of the second demultiplexer is also M), a sum of quantities of wavelength channels of a plurality of first optical circulators is M, and a quantity of wavelength channels of a second optical circulator is M. For each first aggregation module, quantities of wavelength channels of the first multiplexer and the first demultiplexer in the first aggregation module are the same, while quantities of wavelength channels of first multiplexers in different first aggregation modules may be the same or different. In practical applications, for the first multiplexer and the first demultiplexer, a specific quantity of wavelength channels may be selected based on the value of M and actual needs. Correspondingly, the quantity of the plurality of first aggregation modules depends on the value of M and the selected quantities of wavelength channels of the first multiplexer and the first demultiplexer.

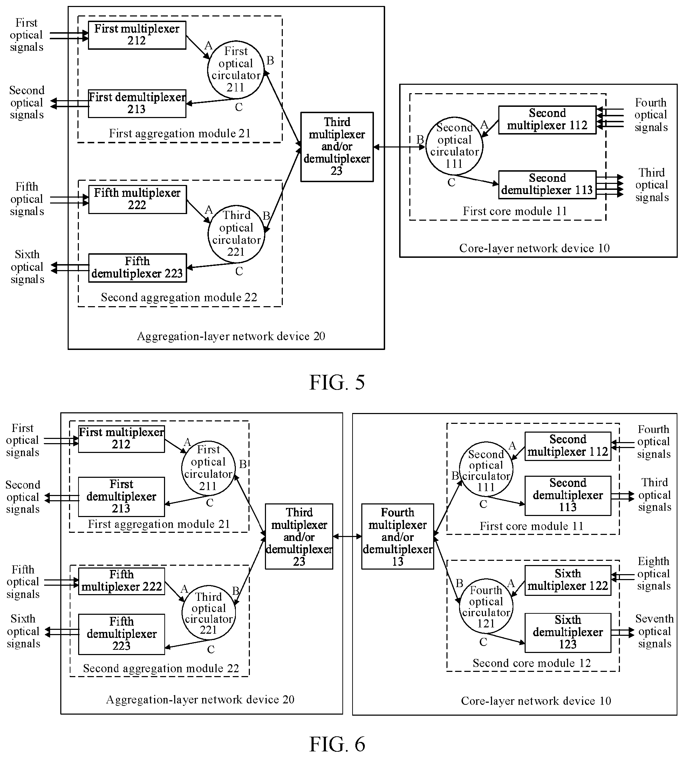

For example, refer to FIG. 5. FIG. 5 shows a case in which the aggregation-layer network device 20 includes a first aggregation module 21 and a second aggregation module 22, which is equivalent to a case in which the aggregation-layer network device includes two first aggregation modules, where one first aggregation module is the first aggregation module 21, and the other first aggregation module is the second aggregation module 22. Various other possible cases are not exhaustively described.

Still referring to FIG. 5, the aggregation-layer network device 20 further includes a third multiplexer and/or demultiplexer 23. The second aggregation module 22 includes a third optical circulator 221, a fifth multiplexer 222, and a fifth demultiplexer 223, where a first port of the third optical circulator 221 is connected to the fifth multiplexer 222, and a third port of the third optical circulator 221 is connected to the fifth demultiplexer 223. A first end of the third multiplexer and/or demultiplexer 23 is connected to a second port of the first optical circulator 211 in the first aggregation module 21, the first end of the third multiplexer and/or demultiplexer 23 is further connected to a second port of the third optical circulator 221 in the second aggregation module 22, and a second end of the third multiplexer and/or demultiplexer 23 is connected to the second optical circulator 111 in the core-layer network device 10.

A type of the third multiplexer and/or demultiplexer is any one of the following: a coarse wavelength division multiplexer, a dense wavelength division multiplexer, or a multi-wavelength division multiplexer.

The access-layer network devices in the three-layer network architecture include a plurality of first access-layer network devices and a plurality of second access-layer network devices, and a sum of a quantity of the first access-layer network devices and a quantity of the second access-layer network devices is M.

When the access-layer network devices send optical signals to the core-layer network device through the aggregation-layer network device, the first multiplexer in the first aggregation module is configured to couple first optical signals respectively sent by the plurality of first access-layer network devices to obtain a first intermediate optical signal, and send the first intermediate optical signal to the third multiplexer and/or demultiplexer through the first optical circulator; and similarly, the fifth multiplexer in the second aggregation module is configured to couple fifth optical signals respectively sent by the plurality of second access-layer network devices to obtain a second intermediate optical signal, and send the second intermediate optical signal to the third multiplexer and/or demultiplexer through the third optical circulator. Correspondingly, the third multiplexer and/or demultiplexer are/is configured to couple the first intermediate optical signal and the second intermediate optical signal to obtain a first coupled optical signal, and send the first coupled optical signal to the second port of the second optical circulator. Correspondingly, the second optical circulator is configured to send the first coupled optical signal, which is input by the third multiplexer and/or demultiplexer through the second port, to the second demultiplexer through the third port; and the second demultiplexer is configured to decouple the first coupled optical signal to obtain M third optical signals, and send the M third optical signals to the M optical modules of the core-layer network device respectively.

When the core-layer network device sends optical signals to the access-layer network devices through the aggregation-layer network device, the second multiplexer is configured to couple fourth optical signals respectively sent by the M optical modules of the core-layer network device to obtain a second coupled optical signal, and send the second coupled optical signal to the first port of the second optical circulator; and the second optical circulator is further configured to send the second coupled optical signal to the third multiplexer and/or demultiplexer through the second port. Correspondingly, the third multiplexer and/or demultiplexer are/is further configured to decouple the second coupled optical signal sent by the second optical circulator to obtain a third intermediate optical signal and a fourth intermediate optical signal, and send the third intermediate optical signal to the second port of the first optical circulator, and send the fourth intermediate optical signal to the second port of the third optical circulator; the first optical circulator is further configured to send the third intermediate optical signal to the first demultiplexer through the third port; the first demultiplexer is further configured to decouple the third intermediate optical signal to obtain a plurality of second optical signals, and send the plurality of second optical signals to the corresponding plurality of first access-layer network devices respectively, where a quantity of the corresponding plurality of first access-layer network devices is the same as a quantity of the plurality of second optical signals; the third optical circulator is further configured to send the fourth intermediate optical signal to the fifth demultiplexer through the third port; and the fifth demultiplexer is further configured to decouple the fourth intermediate optical signal to obtain a plurality of sixth optical signals, and send the plurality of sixth optical signals to the corresponding plurality of second access-layer network devices respectively, where a quantity of the corresponding plurality of second access-layer network devices is the same as a quantity of the plurality of sixth optical signals.

The first access-layer network device and the second access-layer network device may be the same device, or may be different devices. This is not limited in this application. For ease of description, in subsequent embodiments, an example in which the first access-layer network device and the second access-layer network device are different devices is used for description.

The first multiplexer in the first aggregation module is connected to the plurality of first access-layer network devices, the first demultiplexer in the first aggregation module is also connected to the plurality of first access-layer network devices, and the quantity of the plurality of first access-layer network devices is the same as the quantity of wavelength channels of the first multiplexer in the first aggregation module. Similarly, the fifth multiplexer in the second aggregation module is connected to the plurality of second access-layer network devices, the fifth demultiplexer in the second aggregation module is also connected to the plurality of second access-layer network devices, and the quantity of the plurality of second access-layer network devices is the same as the quantity of wavelength channels of the fifth multiplexer in the second aggregation module.

Still referring to FIG. 5, in an example in which the quantities of wavelength channels of the first multiplexer and the fifth multiplexer are the same, and types of the first multiplexer, the first demultiplexer, the fifth multiplexer, the fifth demultiplexer, the second multiplexer, and the second demultiplexer are all CWDMs, the first optical circulator, the third optical circulator, and the second optical circulator can separate the received optical signal and the transmitted optical signal, so that the received optical signal and the transmitted optical signal may use a same wavelength. For example, if M = 16, 16 continuous wavelength channels may be selected from the 18 wavelength channels supported by the CWDM, the first 8 wavelength channels of the 16 wavelength channels are respectively allocated to 8 optical modules connected to the first multiplexer 212 in the first aggregation module 21, and the last 8 wavelength channels of the 16 wavelength channels are respectively allocated to 8 optical modules connected to the fifth multiplexer 222 in the second aggregation module 22. During signal transmission, the first multiplexer 212 in the first aggregation module 21 couples 8 first optical signals of different wavelengths to obtain a first intermediate optical signal, which is transmitted to the third multiplexer and/or demultiplexer 23 through the first optical circulator 211 in the first aggregation module 21, and the fifth multiplexer 222 in the second aggregation module 22 couples 8 fifth optical signals of different wavelengths to obtain a second intermediate optical signal, which is transmitted to the third multiplexer and/or demultiplexer 23 through the third optical circulator 221 in the second aggregation module 22. Then the third multiplexer and/or demultiplexer 23 couple/couples the first intermediate optical signal and the second intermediate optical signal to obtain a first coupled optical signal, and send/sends the first coupled optical signal to the second optical circulator 111.

Similarly, the 16 wavelength channels may also be allocated to 16 optical modules in the core-layer network device 10. During signal transmission, the second multiplexer 112 in the core-layer network device 10 couples 16 fourth optical signals of different wavelengths to obtain a second coupled optical signal, which is transmitted to the third multiplexer and/or demultiplexer 23 through the second optical circulator 111. Therefore, the single optical fiber connecting the third multiplexer and/or demultiplexer 23 and the second optical circulator 111 can achieve 16-transmit and 16-receive bidirectional transmission using a same wavelength.

It should be noted that the bidirectional transmission using the same wavelength may be that the wavelength of the optical signal in the transmitting direction in the first aggregation module is the same as the wavelength of the optical signal in the receiving direction in the first aggregation module, and the wavelength of the optical signal in the transmitting direction in the second aggregation module is the same as the wavelength of the optical signal in the receiving direction in the second aggregation module, and the wavelength of the optical signal in the transmitting direction in the first core module is the same as the wavelength of the optical signal in the receiving direction in the first core module.

It should be noted that the wavelength of the optical signal in the transmitting direction in the first aggregation module and the wavelength of the optical signal in the transmitting direction in the second aggregation module may be different, and the wavelength of the optical signal in the receiving direction in the first aggregation module and the wavelength of the optical signal in the receiving direction in the second aggregation module may be different.

In still another possible implementation, when M is greater than or equal to 4, a plurality of optical circulators may be disposed in the aggregation-layer network device, and a plurality of optical circulators may also be disposed in the core-layer network device.

For example, a plurality of first aggregation modules are disposed in the aggregation-layer network device, and a plurality of first core modules are disposed in the core-layer network device. A sum of quantities of wavelength channels of first multiplexers in the plurality of first aggregation modules is M (a sum of quantities of wavelength channels of first demultiplexers in the plurality of first aggregation modules is also M), a sum of quantities of wavelength channels of second multiplexers in the plurality of first core modules is M (a sum of quantities of wavelength channels of second demultiplexers in the plurality of first core modules is also M), a sum of quantities of wavelength channels of a plurality of first optical circulators is M, and a sum of quantities of wavelength channels of a plurality of second optical circulators is also M. The quantity of the plurality of first aggregation modules and the quantity of the plurality of first core modules may be the same or different, and may be set according to actual needs. For each first aggregation module, quantities of wavelength channels of the first multiplexer and the first demultiplexer in the first aggregation module are the same, while quantities of wavelength channels of first multiplexers in different first aggregation modules may be the same or different. In practical applications, for the first multiplexer and the first demultiplexer, a specific quantity of wavelength channels may be selected based on the value of M and actual needs. Correspondingly, the quantity of the plurality of first aggregation modules depends on the value of M and the selected quantities of wavelength channels of the first multiplexer and the first demultiplexer. Similarly, for each first core module, the quantities of wavelength channels of the second multiplexer and the second demultiplexer in the first core module are the same, while quantities of wavelength channels of second multiplexers in different first core modules may be the same or different. In practical applications, for the second multiplexer and the second demultiplexer, a specific quantity of wavelength channels may be selected based on the value of M and actual needs. Correspondingly, the quantity of the plurality of first core modules depends on the value of M and the selected quantities of wavelength channels of the second multiplexer and the second demultiplexer.

For example, refer to FIG. 6. FIG. 6 shows a case in which the aggregation-layer network device 20 includes a first aggregation module 21 and a second aggregation module 22, and the core-layer network device 10 includes a first core module 11 and a second core module 12, which is equivalent to a case in which the aggregation-layer network device includes two first aggregation modules (one first aggregation module is the first aggregation module 21, and the other first aggregation module is the second aggregation module 22) and the core-layer network device includes two first core modules (one first core module is the first core module 11, and the other first core module is the second core module 12). Various other possible cases are not exhaustively described.

Still referring to FIG. 6, the aggregation-layer network device 20 further includes a third multiplexer and/or demultiplexer 23; and the second aggregation module 22 includes a third optical circulator 221, a fifth multiplexer 222, and a fifth demultiplexer 223, where a first port of the third optical circulator 221 is connected to the fifth multiplexer 222, and a third port of the third optical circulator 221 is connected to the fifth demultiplexer 223. A first end of the third multiplexer and/or demultiplexer 23 is connected to a second port of the first optical circulator 211 in the first aggregation module 21, and the first end of the third multiplexer and/or demultiplexer 23 is further connected to the second port of the third optical circulator 221 in the second aggregation module 22.

Still referring to FIG. 6, the core-layer network device 10 further includes a fourth multiplexer and/or demultiplexer 13, and the second core module 12 includes a fourth optical circulator 121, a sixth multiplexer 122, and a sixth demultiplexer 123. A first port of the fourth optical circulator 121 is connected to the sixth multiplexer 122, and a third port of the fourth optical circulator 121 is connected to the sixth demultiplexer 123.

Still referring to FIG. 6, a first end of the fourth multiplexer and/or demultiplexer 13 is connected to a second port of the second optical circulator 111 in the first core module 11, and the first end of the fourth multiplexer and/or demultiplexer 13 is further connected to a second port of the fourth optical circulator 121 in the second core module 12.

Still referring to FIG. 6, the second end of the third multiplexer and/or demultiplexer 23 is connected to a second end of the fourth multiplexer and/or demultiplexer 13.

A type of the third multiplexer and/or demultiplexer is any one of the following: a coarse wavelength division multiplexer, a dense wavelength division multiplexer, or a multi-wavelength division multiplexer. A type of the fourth multiplexer and/or demultiplexer is any one of the following: a coarse wavelength division multiplexer, a dense wavelength division multiplexer, or a multi-wavelength division multiplexer.

The access-layer network devices in the three-layer network architecture include a plurality of first access-layer network devices and a plurality of second access-layer network devices, and a sum of a quantity of the first access-layer network devices and a quantity of the second access-layer network devices is M.

When the access-layer network devices send optical signals to the core-layer network device through the aggregation-layer network device, the first multiplexer in the first aggregation module is configured to couple first optical signals respectively sent by the plurality of first access-layer network devices to obtain a first intermediate optical signal, and send the first intermediate optical signal to the third multiplexer and/or demultiplexer through the first optical circulator; the fifth multiplexer in the second aggregation module is configured to couple fifth optical signals respectively sent by the plurality of second access-layer network devices to obtain a second intermediate optical signal, and send the second intermediate optical signal to the third multiplexer and/or demultiplexer through the third optical circulator; and the third multiplexer and/or demultiplexer are/is configured to couple the received first intermediate optical signal and second intermediate optical signal to obtain a first coupled optical signal, and send the first coupled optical signal to the fourth multiplexer and/or demultiplexer. Correspondingly, the fourth multiplexer and/or demultiplexer are/is configured to decouple the first coupled optical signal sent by the third multiplexer and/or demultiplexer to obtain a fifth intermediate optical signal and a sixth intermediate optical signal, send the fifth intermediate optical signal to the second port of the second optical circulator, and send the sixth intermediate optical signal to the second port of the fourth optical circulator; the second optical circulator is configured to send the fifth intermediate optical signal to the second demultiplexer through the third port; and the second demultiplexer is configured to decouple the fifth intermediate optical signal to obtain a plurality of third optical signals, and send the plurality of third optical signals to corresponding optical modules respectively, where a quantity of the corresponding optical modules is the same as a quantity of the plurality of third optical signals. The fourth optical circulator is configured to send the sixth intermediate optical signal to the sixth demultiplexer through the third port; and the sixth demultiplexer is configured to decouple the sixth intermediate optical signal to obtain a plurality of seventh optical signals, and send the plurality of seventh optical signals to corresponding optical modules respectively, where a quantity of the corresponding optical modules is the same as a quantity of the plurality of seventh optical signals.

When the core-layer network device sends optical signals to the access-layer network devices through the aggregation-layer network device, the second multiplexer is configured to couple fourth optical signals respectively sent by the plurality of optical modules to obtain a seventh intermediate optical signal, and send the seventh intermediate optical signal to the fourth multiplexer and/or demultiplexer through the second optical circulator; the sixth multiplexer is configured to couple eighth optical signals respectively sent by the plurality of optical modules to obtain an eighth intermediate optical signal, and send the eighth intermediate optical signal to the fourth multiplexer and/or demultiplexer through the fourth optical circulator; and the fourth multiplexer and/or demultiplexer are/is further configured to couple the seventh intermediate optical signal and the eighth intermediate optical signal to obtain a second coupled optical signal, and send the second coupled optical signal to the third multiplexer and/or demultiplexer. Correspondingly, the third multiplexer and/or demultiplexer are/is further configured to decouple the second coupled optical signal sent by the fourth multiplexer and/or demultiplexer to obtain a third intermediate optical signal and a fourth intermediate optical signal, and send the third intermediate optical signal to the second port of the first optical circulator, and send the fourth intermediate optical signal to the second port of the third optical circulator; the first optical circulator is further configured to send the third intermediate optical signal to the first demultiplexer through the third port; the first demultiplexer is further configured to decouple the third intermediate optical signal to obtain a plurality of second optical signals, and send the plurality of second optical signals to the plurality of first access-layer network devices respectively; the third optical circulator is further configured to send the fourth intermediate optical signal to the fifth demultiplexer through the third port; and the fifth demultiplexer is further configured to decouple the fourth intermediate optical signal to obtain a plurality of sixth optical signals, and send the plurality of sixth optical signals to the plurality of second access-layer network devices respectively.

The first access-layer network device and the second access-layer network device may be the same device, or may be different devices. This is not limited in this application. For ease of description, in subsequent embodiments, an example in which the first access-layer network device and the second access-layer network device are different devices is used for description.

The first multiplexer in the first aggregation module is connected to the plurality of first access-layer network devices, the first demultiplexer in the first aggregation module is also connected to the plurality of first access-layer network devices, and the quantity of the plurality of first access-layer network devices is the same as the quantity of wavelength channels of the first multiplexer in the first aggregation module. Similarly, the fifth multiplexer in the second aggregation module is connected to the plurality of second access-layer network devices, the fifth demultiplexer in the second aggregation module is also connected to the plurality of second access-layer network devices, and the quantity of the plurality of second access-layer network devices is the same as the quantity of wavelength channels of the fifth multiplexer in the second aggregation module. Similarly, the second multiplexer in the first core module is connected to the plurality of optical modules of the core-layer network device, the second demultiplexer in the first core module is also connected to the plurality of optical modules, and a quantity of the plurality of optical modules is the same as a quantity of wavelength channels of the second multiplexer in the first core module. Similarly, the sixth multiplexer in the second core module is connected to the plurality of optical modules of the core-layer network device, the sixth demultiplexer in the second core module is also connected to the plurality of optical modules, and a quantity of the plurality of optical modules is the same as a quantity of wavelength channels of the sixth multiplexer in the second core module.

Still referring to FIG. 6, in an example in which quantities of wavelength channels of the first multiplexer and the fifth multiplexer are the same, and quantities of wavelength channels of the second multiplexer and the sixth multiplexer are the same, and types of the first multiplexer, the first demultiplexer, the fifth multiplexer, the fifth demultiplexer, the second multiplexer, the second demultiplexer, the sixth multiplexer, and the sixth demultiplexer are all CWDMs, the first optical circulator, the second optical circulator, the third optical circulator, and the fourth optical circulator can separate the received optical signal and the transmitted optical signal, so that the received optical signal and the transmitted optical signal may use a same wavelength. For example, if M = 16, 16 continuous wavelength channels may be selected from the 18 wavelength channels supported by the CWDM, the first 8 wavelength channels of the 16 wavelength channels are respectively allocated to 8 optical modules connected to the first multiplexer 212 in the first aggregation module 21, and the last 8 wavelength channels of the 16 wavelength channels are respectively allocated to 8 optical modules connected to the fifth multiplexer 222 in the second aggregation module 22. During signal transmission, the first multiplexer 212 in the first aggregation module 21 couples 8 first optical signals of different wavelengths to obtain a first intermediate optical signal, which is transmitted to the third multiplexer and/or demultiplexer 23 through the first optical circulator 211 in the first aggregation module 21, and the fifth multiplexer 222 in the second aggregation module 22 couples 8 first optical signals of different wavelengths to obtain a second intermediate optical signal, which is transmitted to the third multiplexer and/or demultiplexer 23 through the third optical circulator 221 in the second aggregation module 22. Then the third multiplexer and/or demultiplexer 23 couple/couples the first intermediate optical signal and the second intermediate optical signal to obtain a first coupled optical signal, and send/sends the first coupled optical signal to the fourth multiplexer and/or demultiplexer 13.

Similarly, the first 8 wavelength channels of the 16 wavelength channels are respectively allocated to 8 optical modules connected to the second multiplexer 112 in the first core module 11, and the last 8 wavelength channels of the 16 wavelength channels are respectively allocated to other 8 optical modules connected to the sixth multiplexer 122 in the second core module 12. During signal transmission, the second multiplexer 112 in the first core module 11 couples 8 fourth optical signals of different wavelengths to obtain a seventh intermediate optical signal, which is transmitted to the fourth multiplexer and/or demultiplexer 13 through the second optical circulator 111 in the first core module 11, and the sixth multiplexer 122 in the second core module 12 couples 8 eighth optical signals of different wavelengths to obtain an eighth intermediate optical signal, which is transmitted to the fourth multiplexer and/or demultiplexer 13 through the fourth optical circulator 121 in the second core module 12. Then the fourth multiplexer and/or demultiplexer 13 couple/couples the seventh intermediate optical signal and the eighth intermediate optical signal to obtain a second coupled optical signal, and send/sends the second coupled optical signal to the third multiplexer and/or demultiplexer 23. Therefore, the single optical fiber connecting the third multiplexer and/or demultiplexer 23 and the fourth multiplexer and/or demultiplexer 13 can achieve 16-transmit and 16-receive bidirectional transmission using a same wavelength.

In yet another possible implementation, when M is greater than or equal to 4, one optical circulator may be disposed in the aggregation-layer network device, and a plurality of optical circulators may be disposed in the core-layer network device.

For example, one first aggregation module is disposed in the aggregation-layer network device, and a plurality of first core modules are disposed in the core-layer network device. A quantity of wavelength channels of a first multiplexer in the first aggregation module is M (a quantity of wavelength channels of a first demultiplexer is also M), a sum of quantities of wavelength channels of second multiplexers in the plurality of first core modules is M (a sum of quantities of wavelength channels of second demultiplexers is also M), a quantity of wavelength channels of a first optical circulator is M, and a sum of quantities of wavelength channels of a plurality of second optical circulators is M. For each first core module, quantities of wavelength channels of the second multiplexer and the second demultiplexer in the first core module are the same, while quantities of wavelength channels of second multiplexers in different first core modules may be the same or different. In practical applications, for the second multiplexer and the second demultiplexer, a specific quantity of wavelength channels may be selected based on the value of M and actual needs. Correspondingly, the quantity of the plurality of first core modules depends on the value of M and the selected quantities of wavelength channels of the second multiplexer and the second demultiplexer.

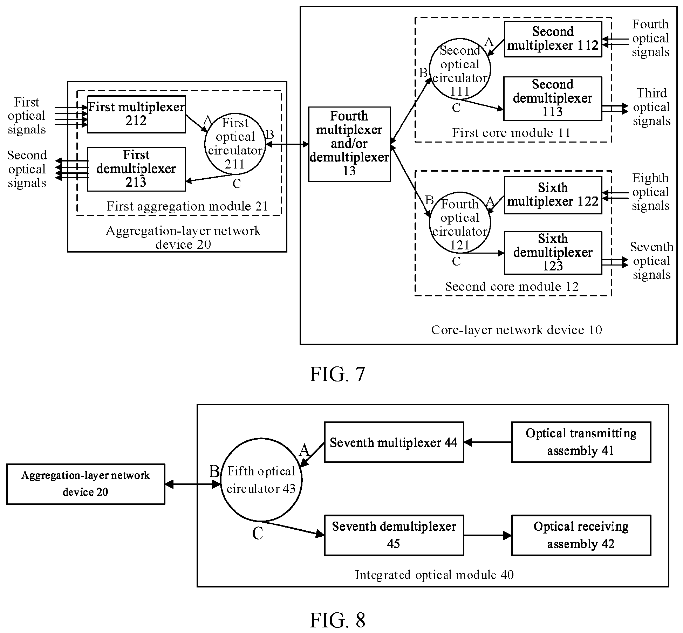

For example, refer to FIG. 7. FIG. 7 shows a case in which the aggregation-layer network device 20 includes a first aggregation module 21 and the core-layer network device 10 includes a first core module 11 and a second core module 12, which is equivalent to a case in which the core-layer network device includes two first core modules (one first core module is the first core module 11, and the other first core module is the second core module 12). Various other possible cases are not exhaustively described.

Still referring to FIG. 7, the core-layer network device 10 further includes a fourth multiplexer and/or demultiplexer 13; and the second core module 12 includes a fourth optical circulator 121, a sixth multiplexer 122, and a sixth demultiplexer 123, where a first port of the fourth optical circulator 121 is connected to the sixth multiplexer 122, and a third port of the fourth optical circulator 121 is connected to the sixth demultiplexer 123.

Still referring to FIG. 7, a first end of the fourth multiplexer and/or demultiplexer 13 is connected to a second port of the second optical circulator 111 in the first core module 11, the first end of the fourth multiplexer and/or demultiplexer 13 is further connected to a second port of the fourth optical circulator 121 in the second core module 12; and a second end of the fourth multiplexer and/or demultiplexer 13 is connected to a second port of the first optical circulator 211.

A type of the fourth multiplexer and/or demultiplexer is any one of the following: a coarse wavelength division multiplexer, a dense wavelength division multiplexer, or a multi-wavelength division multiplexer.

When the access-layer network devices send optical signals to the core-layer network device through the aggregation-layer network device, the first multiplexer is configured to couple first optical signals respectively sent by the plurality of first access-layer network devices to obtain a first coupled optical signal, and send the first coupled optical signal to the first port of the first optical circulator; and the first optical circulator is configured to send the first coupled optical signal to the fourth multiplexer and/or demultiplexer through the second port. Correspondingly, the fourth multiplexer and/or demultiplexer are/is configured to decouple the first coupled optical signal sent by the first optical circulator to obtain a fifth intermediate optical signal and a sixth intermediate optical signal, and send the fifth intermediate optical signal to the second port of the second optical circulator, and send the sixth intermediate optical signal to the second port of the fourth optical circulator. The second optical circulator is configured to send the fifth intermediate optical signal to the second demultiplexer through the third port; and the second demultiplexer is configured to decouple the fifth intermediate optical signal to obtain a plurality of third optical signals, and send the plurality of third optical signals to corresponding optical modules respectively, where a quantity of the corresponding optical modules is the same as a quantity of the plurality of third optical signals. The fourth optical circulator is configured to send the sixth intermediate optical signal to the sixth demultiplexer through the third port; and the sixth demultiplexer is configured to decouple the sixth intermediate optical signal to obtain a plurality of seventh optical signals, and send the plurality of seventh optical signals to corresponding optical modules respectively, where a quantity of the corresponding optical modules is the same as a quantity of the plurality of seventh optical signals.

When the core-layer network device sends optical signals to the access-layer network devices through the aggregation-layer network device, the second multiplexer is configured to couple fourth optical signals respectively sent by the plurality of optical modules to obtain a seventh intermediate optical signal, and send the seventh intermediate optical signal to the fourth multiplexer and/or demultiplexer through the second optical circulator; the sixth multiplexer is configured to couple eighth optical signals respectively sent by the plurality of optical modules to obtain an eighth intermediate optical signal, and send the eighth intermediate optical signal to the fourth multiplexer and/or demultiplexer through the fourth optical circulator; and the fourth multiplexer and/or demultiplexer are/is further configured to couple the seventh intermediate optical signal and the eighth intermediate optical signal to obtain a second coupled optical signal, and send the second coupled optical signal to the first optical circulator. Correspondingly, the first optical circulator is further configured to send the second coupled optical signal, which is input by the fourth multiplexer and/or demultiplexer through the second port, to the first demultiplexer through the third port. The first demultiplexer is configured to decouple the second coupled optical signal to obtain M second optical signals, and send the M second optical signals to the M first access-layer network devices respectively.

Still referring to FIG. 7, in an example in which quantities of wavelength channels of the second multiplexer and the sixth multiplexer are the same, and types of the first multiplexer, the first demultiplexer, the second multiplexer, the second demultiplexer, the sixth multiplexer, and the sixth demultiplexer are all CWDMs, the first optical circulator, the second optical circulator, and the fourth optical circulator can separate the received optical signal and the transmitted optical signal, so that the received optical signal and the transmitted optical signal may use a same wavelength. For example, if M = 16, 16 continuous wavelength channels may be selected from the 18 wavelength channels supported by the CWDM, and the 16 wavelength channels are respectively allocated to optical modules of 16 first access-layer network devices connected to the first multiplexer 212. During signal transmission, the first multiplexer 212 couples 16 first optical signals of different wavelengths to obtain a first coupled optical signal, which is transmitted to the fourth multiplexer and/or demultiplexer 13 through the first optical circulator 211.

Similarly, the first 8 wavelength channels of the 16 wavelength channels are respectively allocated to 8 optical modules connected to the second multiplexer 112 in the first core module 11, and the last 8 wavelength channels of the 16 wavelength channels are respectively allocated to other 8 optical modules connected to the sixth multiplexer 122 in the second core module 12. During signal transmission, the second multiplexer 112 in the first core module 11 couples 8 fourth optical signals of different wavelengths to obtain a seventh intermediate optical signal, which is transmitted to the fourth multiplexer and/or demultiplexer 13 through the second optical circulator 111 in the first core module 11, and the sixth multiplexer 122 in the second core module 12 couples 8 eighth optical signals of different wavelengths to obtain an eighth intermediate optical signal, which is transmitted to the fourth multiplexer and/or demultiplexer 13 through the fourth optical circulator 121 in the second core module 12. Then the fourth multiplexer and/or demultiplexer 13 couple/couples the seventh intermediate optical signal and the eighth intermediate optical signal to obtain a second coupled optical signal, and send/sends the second coupled optical signal to the first optical circulator 211. Therefore, the single optical fiber connecting the first optical circulator 211 and the fourth multiplexer and/or demultiplexer 13 can achieve 16-transmit and 16-receive bidirectional transmission using a same wavelength.

It should be noted that the bidirectional transmission using the same wavelength may be that the wavelength of the optical signal in the transmitting direction in the first aggregation module is the same as the wavelength of the optical signal in the receiving direction in the first aggregation module, and the wavelength of the optical signal in the transmitting direction in the first core module is the same as the wavelength of the optical signal in the receiving direction in the first core module, and the wavelength of the optical signal in the transmitting direction in the second core module is the same as the wavelength of the optical signal in the receiving direction in the second core module.

It should be noted that the wavelength of the optical signal in the transmitting direction in the first core module and the wavelength of the optical signal in the transmitting direction in the second core module may be different, and the wavelength of the optical signal in the receiving direction in the first core module and the wavelength of the optical signal in the receiving direction in the second core module may be different. It should be noted that, for ease of description, the optical modules are not shown in FIG. 2 to FIG. 7.

This application only takes M = 16 as an example for description. A person skilled in the art may know that when M is other integer values, an implementation principle thereof is the same as that when M = 16. Details are not described again in this application.

This application further provides an integrated optical module, which is a pluggable optical module and may be disposed on the core-layer network device.

FIG. 8 is a schematic diagram of a structure of an integrated optical module shown according to an exemplary embodiment. The integrated optical module 40 includes an optical transmitting assembly 41, an optical receiving assembly 42, a fifth optical circulator 43, a seventh multiplexer 44, and a seventh demultiplexer 45. The optical transmitting assembly 41, the seventh multiplexer 44, and a first port of the fifth optical circulator 43 are connected in sequence. A second port of the fifth optical circulator 43 is connected to the aggregation-layer network device 20. A third port of the fifth optical circulator 43, the seventh demultiplexer 45, and the optical receiving assembly 42 are connected in sequence.

The optical transmitting assembly 41 is configured to transmit a plurality of ninth optical signals of different wavelengths, where the plurality of ninth optical signals are transmitted to the seventh multiplexer 44 through optical fibers; the seventh multiplexer 44 is configured to couple the received plurality of ninth optical signals to obtain a third coupled optical signal, and send the third coupled optical signal to the first port of the fifth optical circulator 43; and the fifth optical circulator 43 is configured to send the third coupled optical signal to the aggregation-layer network device 20 through the second port. In a possible implementation, the seventh multiplexer 44 may include a second multiplexer 112, the ninth optical signals may include fourth optical signals, the third coupled optical signal may include a second coupled optical signal, and the fifth optical circulator 43 includes a second optical circulator 111.

The fifth optical circulator 43 is further configured to send a fourth coupled optical signal, which is input by the aggregation-layer network device 20 through the second port, to the seventh demultiplexer 45 through the third port; the seventh demultiplexer 45 is configured to decouple the fourth coupled optical signal to obtain a plurality of tenth optical signals, and send the plurality of tenth optical signals to the optical receiving assembly 42. In a possible implementation, the seventh demultiplexer 45 may include a second demultiplexer 113, the tenth optical signals may include third optical signals, and the fourth coupled optical signal may include a first coupled optical signal.

A reference character A in FIG. 8 represents the first port, a reference character B represents the second port, and a reference character C represents the third port.

In this embodiment, one or more integrated optical modules may be disposed on the core-layer network device according to actual needs.

In this embodiment, the fifth optical circulator is integrated into the pluggable optical module, allowing the received optical signal and the transmitted optical signal to enter through different ports respectively. Therefore, reception and transmission of optical signals of a same wavelength can be achieved, so that the same wavelength can be used multiple times, thereby improving wavelength utilization. Moreover, when the optical circulator is faulty, the integrated optical module may be replaced, which is more convenient.

This application further provides a network system. The network system includes: at least two access-layer network devices, at least one aggregation-layer network device as shown in any one of the foregoing embodiments, and at least one core-layer network device as shown in any one of the foregoing embodiments. For example, the network architecture of the network system is shown in FIG. 1. Details are not described herein again.

A person skilled in the art will easily think of other implementation solutions of this application after considering the specification and practicing the present invention disclosed herein. This application is intended to cover any variations, uses, or adaptive changes of this application. These variations, uses, or adaptive changes comply with the general principles of this application and include common knowledge or conventional technical means in the technical field that are not disclosed in this application. The specification and the embodiments are considered to be exemplary only. The true scope and spirit of this application are indicated by the claims.

It should be understood that this application is not limited to the precise structure described above and shown in the drawings, and various modifications and changes can be made without departing from the scope of this application. The scope of this application is defined only by the appended claims.

## Claims

1. An aggregation-layer network device, comprising a first aggregation module and connected to a plurality of first access-layer network devices and a core-layer network device respectively, wherein the first aggregation module comprises:
a first multiplexer, configured to couple first optical signals respectively from the plurality of first access-layer network devices to obtain a first coupled optical signal;
a first demultiplexer, configured to decouple a second coupled optical signal from the core-layer network device to obtain a plurality of second optical signals; and
a first optical circulator, comprising:
a first port, connected to the first multiplexer;
a second port, connected to the core-layer network device; and
a third port, connected to the first demultiplexer, wherein
the first optical circulator is configured to send the first coupled optical signal from the first multiplexer to the core-layer network device through the first port and the second port in sequence, and send the second coupled optical signal from the core-layer network device to the first demultiplexer through the second port and the third port in sequence.

2. The aggregation-layer network device according to claim 1, wherein the aggregation-layer network device further comprises:
a second aggregation module, wherein the second aggregation module comprises:
a third optical circulator, wherein a first port of the third optical circulator is connected to a fifth multiplexer;
the fifth multiplexer, configured to couple fifth optical signals respectively sent by a plurality of second access-layer network devices to obtain a second intermediate optical signal, and send the second intermediate optical signal to a third multiplexer and/or demultiplexer through the third optical circulator;
a fifth demultiplexer, wherein a third port of the third optical circulator is connected to the fifth demultiplexer; and
the third multiplexer and/or demultiplexer, configured to receive a first intermediate optical signal sent by the first multiplexer in the first aggregation module through the first optical circulator and the second intermediate optical signal, couple the first intermediate optical signal and the second intermediate optical signal to obtain the first coupled optical signal, and send the first coupled optical signal to the core-layer network device, wherein the first intermediate optical signal is obtained by the first multiplexer coupling the first optical signals respectively sent by the plurality of first access-layer network devices, wherein
a first end of the third multiplexer and/or demultiplexer is connected to the second port of the first optical circulator in the first aggregation module, the first end of the third multiplexer and/or demultiplexer is further connected to a second port of the third optical circulator in the second aggregation module, and a second end of the third multiplexer and/or demultiplexer is connected to the core-layer network device.

3. The aggregation-layer network device according to claim 2, wherein
the third multiplexer and/or demultiplexer are/is further configured to decouple the second coupled optical signal sent by the core-layer network device to obtain a third intermediate optical signal and a fourth intermediate optical signal, send the third intermediate optical signal to the second port of the first optical circulator, and send the fourth intermediate optical signal to the second port of the third optical circulator;
the first optical circulator of the first aggregation module is further configured to send the third intermediate optical signal to the first demultiplexer through the third port of the first optical circulator; and the first demultiplexer of the first aggregation module is further configured to decouple the third intermediate optical signal to obtain the plurality of second optical signals, and send the plurality of second optical signals to the plurality of first access-layer network devices respectively; and
the third optical circulator of the second aggregation module is further configured to send the fourth intermediate optical signal to the fifth demultiplexer through the third port of the third optical circulator; and the fifth demultiplexer of the second aggregation module is further configured to decouple the fourth intermediate optical signal to obtain a plurality of sixth optical signals, and send the plurality of sixth optical signals to the plurality of second access-layer network devices respectively.

4. The aggregation-layer network device according to claim 3, wherein
the third multiplexer and/or demultiplexer are/is configured to couple the first intermediate optical signal and the second intermediate optical signal to obtain the first coupled optical signal, and send the first coupled optical signal to a fourth multiplexer and/or demultiplexer in the core-layer network device, wherein the second end of the third multiplexer and/or demultiplexer is connected to the fourth multiplexer and/or demultiplexer; and
the third multiplexer and/or demultiplexer are/is further configured to decouple the second coupled optical signal sent by the fourth multiplexer and/or demultiplexer to obtain the third intermediate optical signal and the fourth intermediate optical signal, send the third intermediate optical signal to the second port of the first optical circulator, and send the fourth intermediate optical signal to the second port of the third optical circulator.

5. The aggregation-layer network device according to claim 1, wherein
the first optical circulator is configured to send the first coupled optical signal through the second port of the first optical circulator to a fourth multiplexer and/or demultiplexer in the core-layer network device, wherein the second port of the first optical circulator is connected to the fourth multiplexer and/or demultiplexer; and
the first optical circulator is further configured to send the second coupled optical signal, which is input by the fourth multiplexer and/or demultiplexer through the second port, to the first demultiplexer through the third port.

6. The aggregation-layer network device according to any one of claims 1 to 5, wherein a type of the first multiplexer is any one of the following: a coarse wavelength division multiplexer, a dense wavelength division multiplexer, or a multi-wavelength division multiplexer; and a type of the first demultiplexer is any one of the following: a coarse wavelength division multiplexer, a dense wavelength division multiplexer, or a multi-wavelength division multiplexer.

7. A core-layer network device, comprising a first core module and connected to a plurality of optical modules in the core-layer network device and an aggregation-layer network device respectively, wherein the first core module comprises:
a second multiplexer, configured to couple fourth optical signals respectively from the plurality of optical modules to obtain a second coupled optical signal;
a second demultiplexer, configured to decouple a first coupled optical signal from the aggregation-layer network device to obtain a plurality of third optical signals; and
a second optical circulator, comprising:
a first port, connected to the second multiplexer;
a second port, connected to the aggregation-layer network device; and
a third port, connected to the second demultiplexer, wherein
the second circulator is configured to send the first coupled optical signal from the aggregation-layer network device to the second demultiplexer through the second port and the third port in sequence; and send the second coupled optical signal from the second multiplexer to the aggregation-layer network device through the first port and the second port in sequence.

8. The core-layer network device according to claim 7, wherein the core-layer network device further comprises:
a fourth multiplexer and/or demultiplexer, configured to decouple the first coupled optical signal sent by the aggregation-layer network device to obtain a fifth intermediate optical signal and a sixth intermediate optical signal, send the fifth intermediate optical signal to the second port of the second optical circulator, and send the sixth intermediate optical signal to a fourth optical circulator of a second core module; and
the second core module, wherein the second core module comprises:
the fourth optical circulator, configured to send the sixth intermediate optical signal to a sixth demultiplexer through a third port of the fourth optical circulator, wherein a second port of the fourth optical circulator is connected to the fourth multiplexer and/or demultiplexer, and the third port of the fourth optical circulator is connected to the sixth demultiplexer;
the sixth demultiplexer, configured to decouple the sixth intermediate optical signal to obtain a plurality of seventh optical signals, and send the plurality of seventh optical signals to corresponding optical modules in the core-layer network device respectively, wherein a quantity of the corresponding optical modules is the same as a quantity of the plurality of seventh optical signals; and
the sixth multiplexer, wherein the sixth multiplexer is connected to a first port of the fourth optical circulator, wherein
a first end of the fourth multiplexer and/or demultiplexer is connected to the second port of the second optical circulator in the first core module, the first end of the fourth multiplexer and/or demultiplexer is further connected to the second port of the fourth optical circulator in the second core module, and a second end of the fourth multiplexer and/or demultiplexer is connected to the aggregation-layer network device.

9. The core-layer network device according to claim 8, wherein
the second optical circulator is configured to send the fifth intermediate optical signal to the second demultiplexer through the third port of the second optical circulator; and
the second demultiplexer is configured to decouple the fifth intermediate optical signal to obtain the plurality of third optical signals, and send the plurality of third optical signals to the plurality of optical modules in the core-layer network device respectively, wherein a quantity of the plurality of optical modules is the same as a quantity of the plurality of third optical signals.

10. The core-layer network device according to claim 8 or 9, wherein
the second multiplexer is configured to couple the fourth optical signals respectively sent by the plurality of optical modules to obtain a seventh intermediate optical signal, and send the seventh intermediate optical signal to the fourth multiplexer and/or demultiplexer through the second optical circulator;
the sixth multiplexer is configured to couple eighth optical signals respectively sent by the corresponding optical modules to obtain an eighth intermediate optical signal, and send the eighth intermediate optical signal to the fourth multiplexer and/or demultiplexer through the fourth optical circulator; and
the fourth multiplexer and/or demultiplexer are/is further configured to couple the seventh intermediate optical signal and the eighth intermediate optical signal to obtain the second coupled optical signal, and send the second coupled optical signal to the aggregation-layer network device.

11. The core-layer network device according to claim 10, wherein
the fourth multiplexer and/or demultiplexer are/is configured to decouple the first coupled optical signal sent by a third multiplexer and/or demultiplexer to obtain the fifth intermediate optical signal and the sixth intermediate optical signal, send the fifth intermediate optical signal to the second port of the second optical circulator, and send the sixth intermediate optical signal to the second port of the fourth optical circulator, wherein the second end of the fourth multiplexer and/or demultiplexer is connected to the third multiplexer and/or demultiplexer in the aggregation-layer network device; and
the fourth multiplexer and/or demultiplexer are/is further configured to couple the seventh intermediate optical signal and the eighth intermediate optical signal to obtain the second coupled optical signal, and send the second coupled optical signal to the third multiplexer and/or demultiplexer.

12. The core-layer network device according to claim 7, wherein
the second optical circulator is configured to send the first coupled optical signal from the third multiplexer and/or demultiplexer to the second demultiplexer through the second port and the third port of the second optical circulator in sequence, wherein the second port of the second optical circulator is connected to the third multiplexer and/or demultiplexer in the aggregation-layer network device; and
the second optical circulator is further configured to send the second coupled optical signal from the second multiplexer to the third multiplexer and/or demultiplexer through the first port and the second port in sequence.

13. The core-layer network device according to any one of claims 7 to 12, wherein the core-layer network device further comprises:
an optical transmitting assembly, configured to transmit a plurality of ninth optical signals of different wavelengths to a seventh multiplexer, wherein the seventh multiplexer comprises the second multiplexer, the ninth optical signals comprise the fourth optical signals, the seventh multiplexer is configured to couple the received plurality of ninth optical signals to obtain a third coupled optical signal, and send the third coupled optical signal to a fifth optical circulator, the third coupled optical signal comprises the second coupled optical signal, and the fifth optical circulator comprises the second optical circulator; and
an optical receiving assembly, configured to receive a plurality of tenth optical signals sent by a seventh demultiplexer, wherein the seventh demultiplexer comprises the second demultiplexer, the seventh demultiplexer is configured to receive a fourth coupled optical signal sent by the fifth optical circulator, and decouple the fourth coupled optical signal to obtain the plurality of tenth optical signals, the fourth coupled optical signal comprises the first coupled optical signal, and the tenth optical signals comprise the third optical signals.

14. The core-layer network device according to claim 13, wherein an integrated optical module is disposed on the core-layer network device, and the integrated optical module comprises the optical transmitting assembly, the optical receiving assembly, the fifth optical circulator, the seventh multiplexer, and the seventh demultiplexer.

15. The core-layer network device according to claim 14, wherein the integrated optical module is pluggably connected to the core-layer network device.

16. The core-layer network device according to any one of claims 7 to 15, wherein a type of the second multiplexer is any one of the following: a coarse wavelength division multiplexer, a dense wavelength division multiplexer, or a multi-wavelength division multiplexer; and a type of the second demultiplexer is any one of the following: a coarse wavelength division multiplexer, a dense wavelength division multiplexer, or a multi-wavelength division multiplexer.

17. A network system, comprising: at least two access-layer network devices, at least one aggregation-layer network device according to any one of claims 1 to 6, and at least one core-layer network device according to any one of claims 7 to 16.
